# EUROPEAN PATENT SPECIFICATION

(11) **EP 4 196 835 B1**
(45) Date of publication and mention of the grant of the patent: **01.10.2025**
(21) Application number: 20764948.4
(22) Date of filing: 11.08.2020
(51) Int. Cl.: G02B 21/00, G02B 27/00, G02B 27/10

(54) **BEAM SPLITTING DEVICE**
STRAHLTEILUNGSVORRICHTUNG
DISPOSITIF DE DIVISION DE FAISCEAU

(43) Date of publication of application: 21.06.2023
(73) Proprietor: Leica Microsystems CMS GmbH, 35578 Wetzlar (DE)
(72) Inventor: GUGEL, Hilmar, 69221 Dossenheim (DE)
(74) Representative: Schaumburg und Partner Patentanwälte mbB
(86) International application number: PCT/EP2020/072533
(87) International publication number: WO 2022/033663

(56) References cited:
- US-A1- 2003 021 018
- US-A1- 2005 264 875
- US-A1- 2007 152 556
- US-A1- 2008 225 906
- US-A1- 2011 273 768

## Description

### Technical field

The present invention relates to a beam splitting device for separating illumination light and detection light in an optical apparatus. Further, the present invention relates to an optical apparatus comprising a beam splitting device.

### Background

In the field of microscopy, it is often necessary to separate illumination light and detection light which have different wavelengths and propagate along a common optical path. For instance, in a fluorescence application, it may be desirable to filter specific color bands for both excitation and fluorescence emission. For this purpose, beam splitting devices based on dichroic optical elements, colored filters and mirrors may be used. Although a great variety of such optical elements is available, these elements have their limitations in terms of flexibility in wavelength selection.

Recently, acousto-optical components have been used as beam splitters as disclosed in EP 1055 144 B1, EP 1281997 B1, and EP 1421427 B1. Such an acousto-optical component may be formed by a material like glass or quartz or a crystalline material. For example, the material might consist of tellurium dioxide, TeO₂. The acousto-optical component comprises a piezoelectric transducer which can be electrically controlled to create sound waves in the material which can be thought of as moving periodic planes of expansion and compression that change the index of refraction. Light entering the crystal is diffracted due to the resulting periodic index modulation, and an interference occurs similar to Bragg diffraction. Thus, the acousto-optical component can be freely tuned to diffract one or more components of the light entering the crystal, wherein the diffracted light component emerges from the crystal in a direction which is different from the propagation direction of the undiffracted light. Thus, a spatial separation of light can be conveniently achieved.

However, a typical acousto-optical component is limited in its spectral width, i.e. in terms of the range of light wavelengths which can be processed by the acousto-optical component. Currently, the spectral width of an acousto-optical component typically covers a range which is less than an octave, e.g. from approximately 440 nm to 800 nm. Provided that no light outside this standard range is needed, the entire light can be supplied to the acousto-optical component via a single port. However, a wavelength extension beyond the standard range is technically very difficult to realize. Thus, in case that additional light with wavelengths outside the standard range is needed, this additional light must be coupled into the system via a second port by-passing the acousto-optical component. Using two or more ports for supplying the light in its entirety to the system has the disadvantage that the different light components have to be spatially adjusted to each other in terms of their light propagation directions.

Document US 2011/273768 A1 discloses a tunable multiple laser pulse scanning microscope which is configured to apply two pulsed laser beams with distinct wavelengths incident on a scanning spot of a sample to be imaged simultaneously or at a specific time delay. The microscope includes a single laser light source which emits two laser pulses and an acousto-optic tunable filter which is configured to tune at least one of the two laser pulses sent through the acousto-optic tunable filter. The laser pulses emitted by the laser light source first propagate along two spatially separated beam paths and are then combined into a single beam path upstream of the acousto-optic tunable filter. The microscope further comprises a delay stage that is movable back and forth upstream of the acousto-optic tunable filter. Thus, a time delay between light pulses output from the acousto-optic tunable filter can be controlled.

Document US 2005/264875 A1 discloses an optical device which is adapted to combine two light beams having different wavelengths. The light beams are emitted by a light source including two lasers. Each of the light beams is reflected at two tilting mirrors. By partial reflection at a prism, each light beam is split into two reference beams propagating towards a position detector and into a transmitted light beam propagating towards an acousto-optic tunable filter. Based on the position data acquired by the position detector, the tilting mirrors are driven until the light beams that exit the prism are sufficiently collinear. In order for the position detector to acquire the position data, the two light beams fall onto the prism at different positions.

### Summary

It is an object of the present invention to provide a beam splitting device which is capable of separating illumination light and detection light in an optical apparatus in a reliable and compact manner.

The afore-mentioned object is achieved by the subject-matter of claim 1. Advantageous embodiments are defined in the dependent claims and the following description.

A beam splitting device for separating illumination light and detection light in an optical apparatus comprises a light supply unit configured to supply the illumination light including first illumination light having wavelengths within a first wavelength range and second illumination light having wavelengths within a second wavelength range, the first and second wavelength ranges being separated from each other. The beam splitting device further comprises an acousto-optical component tunable to diffract at least one spectral component of the first illumination light having a selected wavelength within the first wavelength range to generate at least one illumination light beam of a predetermined diffraction order while transmitting the second illumination light within the second wavelength range without diffraction. The beam splitting device further comprises a light coupling unit configured to couple the first illumination light and the second illumination light from the light supply unit into the acousto-optical component. The light supply unit is configured to supply the first illumination light and the second illumination light collinearly to the light coupling unit. The light coupling unit is configured to spatially separate the first illumination light and the second illumination light for directing the spatially separated first and second illumination lights along different light propagation directions into the acousto-optical component.

The beam splitting device allows to introduce the entire light, which comprises the first illumination light and the second illumination lights, via one single port into an optical illumination path leading to the sample to be imaged. For this purpose, the entire illumination light is guided through the acousto-optical component, and the acousto-optical component is controlled to diffract only the first illumination light whereas the second illumination light remains unaffected by diffraction. The light coupling unit serves to couple the first and second illumination lights along different propagation paths into the acousto-optical component, these propagation paths being selected in such a way that the first and second illumination lights emerging from the the acousto-optical component are combined as desired to illuminate the sample jointly.

Thus, in contrast to conventional approaches which use spatially separated ports as for example several optical fibers for introducing the different spectral components into the illumination path, the beam splitting device proposed herein enables the first and second illumination light to be guided through the same optical components. As a result, adverse effects due to drift caused by thermal expansion or due to misalignment can be reliably avoided. In particular, a lateral shift of the focus of the illumination light originating from one port relative to the focus of the illumination light originating from another port can be prevented from occurring. Accordingly, any instabilities between the illumination foci and color-dependent offsets of the foci can be avoided

In addition, compared to conventional approaches, providing only one port for coupling the illumination light into the system requires a smaller number of optical components, mountings and adjustment elements as optical fibers, lenses, mirrors etc. up to the point in the illumination path where the illumination light is combined. Thus, the costs for implementing the proposed configuration are relatively low.

The spatial separation of the first and second illuminations lights caused by the light coupling unit is not to be understood in a strict sense that the first and second wavelength ranges must be completely separated from each other, i.e. only light of the first wavelength range propagates along a first direction into the acousto-optical component and only light of the second wavelength range propagates along a second direction into the acousto-optical component. Although such a complete light separation may be desirable, from a practical point of view, it may be sufficient that the light coupling unit is configured to spatially separate the first illumination light and the second illumination light at least to a major extent from each other. Thus, in case that the light coupling unit uses e.g. a dichroic element which reflects and transmits different spectral components to provide light separation, it may not be possible to achieve a complete separation, in particular if the spectral components which are to be separated from each other are spectrally close together. For instance, a separation to a major extent may be realized in case that the light coupling unit enables the first and second illumination lights to be separated to an extent greater than 50 %, preferably greater than 70 %, and even better greater than 90 %. In such a case, less than 50%, 30 %, or 10 % of the intensity of the respective illumination light is separated into the false channel, i.e. propagates into the acousto-optical component along a direction which is actually intended for the other illumination light. Just for simplicity, complete separation is assumed in the following description bearing in mind that the first and second illumination lights may be separated only to a major or predominant extent.

The light supply unit is a component which is used to introduce the illumination light into an optical illumination path of the optical apparatus. For this purpose, the supply unit may comprise one or more optical fibers and/or one or more light sources, in particular laser sources which emit the illumination light into the fiber(s). The laser sources may be combined to a module which is included in the supply unit. Further, a so-called white light laser (supercontinuum laser) source may be included in the supply unit which emits laser light with a continuous spectrum. Apart from the components mentioned above, the supply unit may comprise further elements of other types as for example one or more optical filters, a scanner, etc.

Without being limited thereto, the beam splitting device can be advantageously used in a microscope, in particular a laser scanning microscope where the illumination light is applied to a sample to excite fluorescent light that is detected for imaging the sample.

In a preferred embodiment, the light supply unit comprises a single optical fiber which is configured to emit the first illumination light and the second illumination light collinearly towards the light coupling unit. The optical fiber may be a single mode fiber, and a light output end thereof can be effectively used as single point light source.

Preferably, the acousto-optical component is configured to transmit the detection light without diffraction. In this case, the acousto-optical component may be used with regard to the second illumination light and the detection light as a passive, i.e. not actively controlled element which affects the light only by refraction rather than by diffraction.

The light coupling unit may comprise an optical element which is configured to reflect the first and second illumination lights along the different propagation directions into the acousto-optical component. For example, the optical element may be formed by prism having suitable geometry to allow the different directions of incidence of the first and second illumination lights on the acousto-optical component.

In a specific embodiment, the light coupling unit may comprise a front surface facing towards the light supply unit and a back surface facing away from the supply unit. The front surface may comprise a first front surface portion with a dichroic layer configured to reflect one of the first and second lights towards the acousto-optical component and to transmit the other of the first and second lights by refraction towards the back surface. The back surface may comprise a first back surface portion configured to reflect the other of the first and second lights back to the front surface. The front surface may comprise a second front surface portion spatially separated from the first front surface portion and configured to transmit the other of the first and second lights reflected back from the first back surface portion by refraction towards the acousto-optical component. The first back surface portion may be non-parallel to at least one of the first and second front surface portions.

By using non-parallel surface portions of a front surface and a back surface of the light coupling unit, respectively, the design of the light coupling unit can be easily and precisely tailored to the different directions of incidence of the first and second illumination lights on the acousto-optical component. Differences in the two illumination directions are primarily given by the manufacturing accuracy of the light coupling units.

It should be noted that the dichroic layer need not be limited to the first front surface portion. Rather, the dichroic layer may cover the entire front surface of the light coupling unit to simplify the production.

Preferably, the first back surface portion comprises a reflective coating, for example a metallic coating or a dielectric coating, configured to reflect the other of the first and second lights back to the second front surface portion. A dielectric or metallic coating is suitable to reflect the respective light back to the front surface of the light coupling unit, and at the same time it can be used to influence the polarization state of the reflected light as desired.

The front surface including the first and second front surface portions may be formed by a single planar surface, wherein the first back surface portion is non-parallel to said planar front surface. In this case, a tilt angle of the back surface portion relative to the planar front surface can be precisely selected in accordance with the desired difference between the directions along which the first and second illumination lights propagate towards the acousto-optical component.

According to another embodiment, the back surface including the first back surface portion is formed by a single planar surface, wherein one of the first and second front surface portions is non-parallel to said planar back surface while the other of the first and second front surface portions is parallel to said planar back surface. Also this embodiment allows to adjust precisely the intended difference between the directions along which the first and second illumination lights propagate towards the acousto-optical component. Again, differences in the two illumination directions are primarily given by the manufacturing accuracy of the light coupling units.

The back surface may comprise a second back surface portion which is parallel to one of the first and second front surface portions.

According to a preferred embodiment, the optical element is configured to transmit the detection light through those surface portions of the front and back surfaces which are parallel to each other. Since the detection light passes through parallel surface portions of the light coupling unit, only a parallel displacement of the detection light is caused by the light coupling unit. As a result, an optical detection path can be configured easily.

Preferably, the light coupling unit and the acousto-optical component are adapted to each other such that the at least one diffracted illumination light beam of the first illumination light and the second illumination light transmitted without diffraction emerge from the acousto-optical component collinearly or at least in parallel. In particular when the emerging light components are combined collinearly, any focus shifts of the illumination light can be avoided in the sample.

In a preferred embodiment, the beam splitting device comprises optical means configured to alter a polarization state of at least one of the first and second illumination lights such that the at least one diffracted illumination beam of the first illumination light and the second illumination light emerges from the acousto-optical component with equal polarization states. The afore-mentioned means altering the polarization state may comprise a reflective coating which is e.g. applied to the back surface of the light coupling unit. Alternatively, a waveplate may be used which rotates the polarization direction of one of the first and second illumination lights by a certain amount, e.g. 90° relative to the other illumination light. The waveplate may be located upstream of a position where the first and second illuminations lights enter the common optical fiber emitting the light towards the light coupling unit.

The light coupling unit and the acousto-optical component may be adapted to each other to compensate for dispersion. The illumination light which propagates between the front and back surfaces of the light coupling unit undergoes dispersion. As a result, a wavelength-dependent angular splitting of the illumination light may occur when the illumination light emerges from the light coupling unit towards the acousto-optical component. On the other hand, also the acousto-optical component may cause dispersion and thus angular splitting of the light. This can be considered when selecting a suitable material of the light coupling unit in order to compensate for adverse dispersion effects.

The beam splitting device may comprise an additional acousto-optical component for transmitting the detection light towards a detector, wherein the additional acousto-optical component is configured to compensate for a prismatic effect caused by the acousto-optical component. The additional acousto-optical component may be structurally identical with the other acousto-optical component and opposedly oriented thereto. The additional acousto-optical component may form a passive element in terms of diffraction. However, the additional acousto-optical component can also be used as a second active element to further or additionally suppress certain wavelengths or polarization components.

According to another aspect, an optical apparatus is provided which comprises a beam splitting device as disclosed herein. The optical apparatus may be a microscope, in particular a laser scanning microscope.

### Short Description of the Figures

Hereinafter, specific embodiments are described referring to the drawings, wherein:
- Figure 1: is a schematic diagram of a laser scanning microscope including a beam splitting device according to a comparative example;
- Figure 2: is a schematic diagram showing a laser scanning microscope including a beam splitting device according to an embodiment;
- Figure 3: is a schematic diagram showing the laser scanning microscope of Figure 2 based on a different illustration of the optical paths provided by the beam splitting device;
- Figure 4: is a schematic diagram showing the laser scanning microscope including a beam splitting device according to another embodiment; and
- Figure 5: is a schematic diagram showing the laser scanning microscope including a beam splitting device according to another embodiment.

### Detailed Description

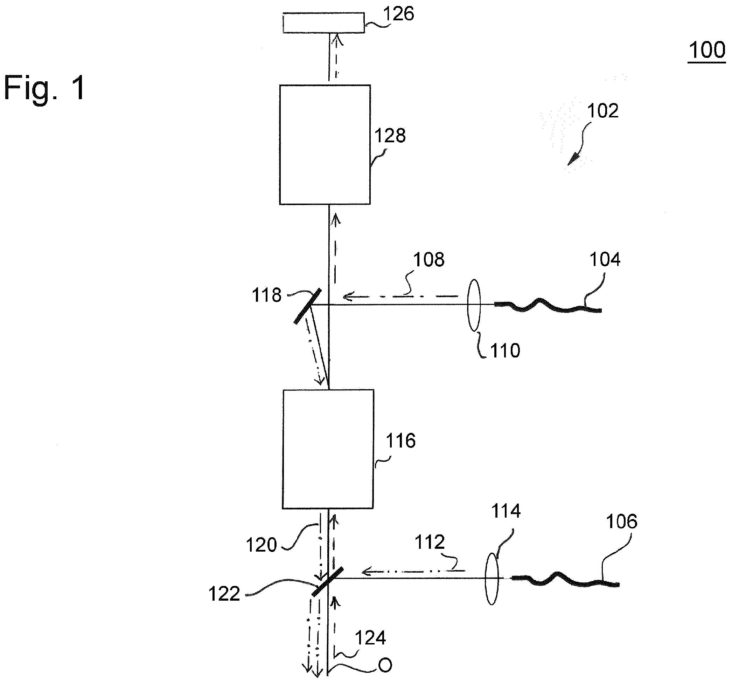

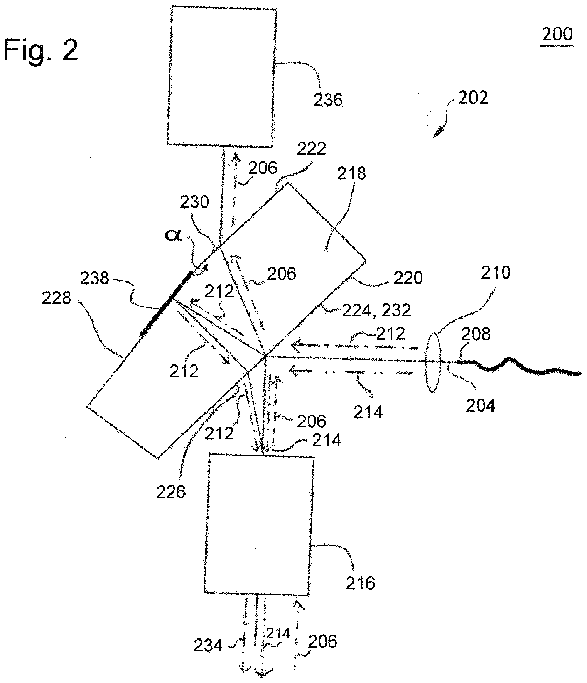

At first, a comparative example is explained with reference to Figure 1 in order to illustrate a conventional configuration for separating illumination light and detection light in an optical apparatus. Subsequently, specific embodiments are described with reference to Figures 2 to 5 illustrating the differences of the technical solution proposed herein compared to the conventional configuration.

It is to be noted that Figures 1 to 5 serve only for illustrating those features which may help to understand an operating principle in the context of the present disclosure. Needless to say that the specific configurations shown in Figures 1 to 5 may comprise additional components not shown in the Figures 1 to 5. In particular, Figures 1 to 5 show microscopes as examples. It is evident that these microscopes would include additional elements as for example lenses, filters, light sources, etc. when put into practice.

Figure 1 shows a conventional laser scanning microscope 100 as an example of an optical apparatus using a conventional beam splitting device 102 for separating illumination light applied to a sample (not shown in Figure 1) and detection light emerging therefrom.

The beam splitting device 102 of the comparative example includes a light supply unit which is formed by two optical fibers 104 and 106. The first optical fiber 104 is used to supply first illumination light 108 through a lens 110 into an optical illumination path of the laser scanning microscope 100. Just as an example, it may be assumed that the first illumination light 108 includes wavelengths within a first wavelength range from about 440 nm to 800 nm. Hereinafter, a direction along which the first illumination light 108 propagates in the laser scanning microscope 100 is illustrated by dot-dash arrows. The second optical fiber 106 is used to supply second illumination light 112 through a lens 114 into the optical illumination path. In this example, it may be assumed that the second illumination light 112 includes wavelengths within a second wavelength range from about 400 nm to 410 nm. Hereinafter, a direction along which the second illumination light 112 propagates in the laser scanning microscope 100 is illustrated by double dot-dash arrows.

The beam splitting device 102 comprises an acousto-optical component 116 formed by a crystal provided with a piezoelectric transducer (not shown in Figure 1) which can be electrically tuned to create sound waves in the crystal serving as a diffraction grating. For this comparative example, it is assumed that the acousto-optical component 116 and a driver electronics thereof are limited in terms of a spectral width to the first wavelength range from 440 nm to 800 nm. Thus, the acousto-optical component 116 is only configured to actively influence the first illumination light 108 by diffraction but not the second illumination light 112. Accordingly, the beam splitting device 102 is designed to supply only the first illumination light 108 via the acousto-optical component 116 into the illumination path whereas the second illumination light 112 bypasses the acousto-optical component when introduced into the illumination path. In other words, the beam splitting device 102 shown in Figure 1 uses two spatially separated ports represented by the two optical fibers 104 and 106 for coupling the first illumination light 108 and the second illumination light 112 into the illumination path wherein the port represented by the optical fiber 106 bypasses the acousto-optical component.

Specifically, the first illumination light 108 emitted from the optical fiber 104 is reflected by a mirror 118 towards the acousto-optical component 116. The acousto-optical component 116 is configured to diffract a spectral component of the first illumination light 108 to generate an illumination light beam 120 of a first diffraction order emerging from the acousto-optical component 116 along an optical axis of the illumination path leading to the sample. A direction along which the first illumination light 108 reflected by the mirror 118 enters the acousto-optical component 116 is inclined such that the first diffraction order of the first illumination light 108 created by the acousto-optical element 116 is deflected to be coincident, i.e. collinear with the optical axis O of the illumination path. After passing through a dichroic mirror 122, the illumination light beam 120 formed from the first diffraction order of the illumination light 108 propagates along the optical axis O towards the sample.

The second illumination light 112 emitted from the optical fiber 106 is reflected by the dichroic mirror 122 along the optical axis O so that the second illumination light 112 is spatially combined with the first illumination light 108. As a result, the sample is illuminated with light which is composed of light components being formed by the first and second illumination lights 108, 112.

The beam splitting device 102 is further configured to guide detection light 124 from the sample to a detector 126 of the laser scanning microscope 100 in a direction opposite to the propagation direction of the first and second illumination lights 108, 112 illuminating the sample. Hereinafter, a direction along which the detection light 124 propagates in the laser scanning microscope 100 is illustrated by dashed arrows in Figure 1. The detection light 124 enters the acousto-optical component 116 through the dichroic mirror 122 and remains unaffected by the acousto-optical component 116 in terms of diffraction when passing therethrough. Accordingly, the detection light 124 emerges from the acousto-optical component 116 without being diffracted thereby. After propagating past the mirror 118, the detection light 124 enters an additional acousto-optical component 128 which is provided to compensate for a prismatic effect which is caused by the acousto-optical component 116. For this purpose, the additional acousto-optical component 128 is structurally identical with the acousto-optical component 116 and opposedly oriented thereto. Thus, the additional acousto-optical component 128 forms a passive element in terms of diffraction so that the detection light 124 passes through the acousto-optical component 128 towards the detector 126 without being diffracted.

It is to be noted that the acousto-optical component 116 is illustrated in Figure 1 in a very simplified way. In particular, the acousto-optical component 116 has usually not the shape of a parallelepiped as shown in Figure 1 where light input and output surfaces of the acousto-optical component 116 are illustrated as parallel surfaces. Rather, the acousto-optical component 116 may be provided with light entrance and exit surfaces which are tilted relative to each other.

In the comparative example shown in Figure 1, it must be considered as a drawback that the first illumination light 108 and the second illumination light 112 are supplied to the illumination path by means of two spatially separated ports represented by the optical fibers 104, 106. Thus, the spatially separated light coupling into the illumination path requires the first and second illumination lights 108, 112 to be guided through different optical components which may cause a drift or misalignment e.g. due to thermal expansion. Further, a lateral shift of the focus of the illumination light originating from one optical fiber relative to the focus of the illumination light originating from the other optical fiber may occur. This may result in instabilities between the illumination foci and color-dependent offsets of the foci. In addition, providing two separate ports for coupling the illumination light into the system requires separate optical components, mountings and adjustment elements as optical fibers, lenses, mirrors etc. up to the point in the illumination path where the illumination light is combined. Thus, the costs for implementing such a configuration are high.

In the following, specific embodiments are described which are suitable to overcome the afore-mentioned drawbacks.

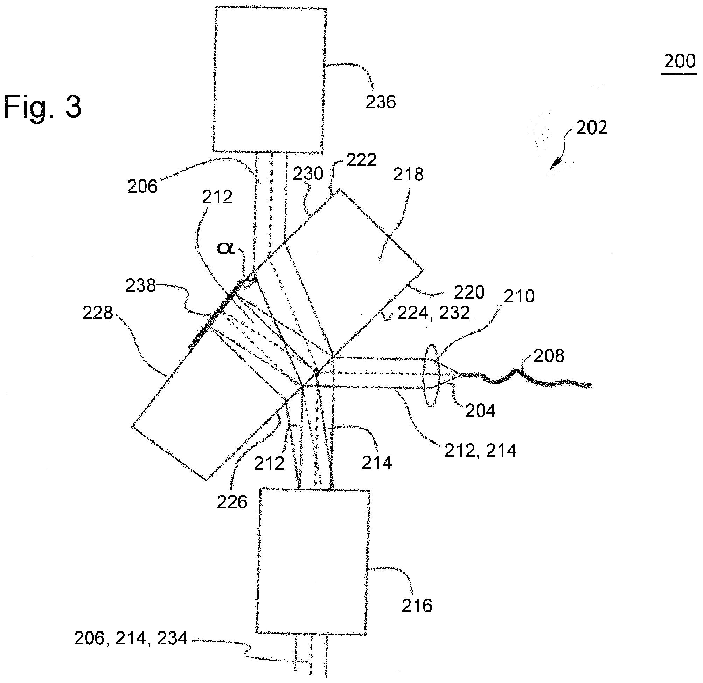

Figures 2 and 3 show a laser scanning microscope 200 comprising a beam splitting device 202 which is used for separating illumination light 204 applied to a sample (not shown in Figures 2 and 3) and detection light 206 emerging therefrom. Figures 2 and 3 show the same configuration and differ only in how the light propagation is illustrated. Whereas Figure 3 illustrates the light in form of light bundles, Figure 2 shows only a chief or central ray of the respective light bundle (corresponding to Figure 1). The beam splitting device 202 of the laser scanning microscope 200 includes a light supply unit 208 which may be formed by a single optical fiber. The light supply unit 208 is configured to supply the illumination light 204 through a lens 210 into an optical illumination path of the laser scanning microscope. Taking up the comparative example of Figure 1, it may be assumed that the illumination light 204 includes first illumination light 212 having wavelengths within a first wavelength range from about 440 nm to 800 nm and second illumination light 214 having wavelengths within a second wavelength range from about 400 nm to 410 nm. Accordingly, the first and second wavelength ranges are spectrally separated from each other. Needless to say, that the afore-mentioned wavelength ranges are to be understood merely as examples. Further, the spectral separation of the wavelength ranges is not limited to a case where the ranges are separated from each other by a spectral gap which is from 410 nm to 440 nm in the present example. Rather, the spectral separation of the wavelength ranges is to be understood to cover a case where the first and second wavelength ranges adjoin each other without any gap so that the entire illumination light 204 including the first and second illumination lights 212, 214 exhibit a continuous spectrum which may be provided e.g. which may be emitted by a white light laser into the optical fiber 208. As in Figure 1, directions along which the first and second illumination lights 212, 214 propagate in the laser scanning microscope 200 are illustrated by dot-dash arrows and double dot-dash arrows, respectively. Likewise, the light propagation direction of the detection light 206 is illustrated by dashed arrows.

The beam splitting device 202 comprises an acousto-optical component 216 which essentially corresponds to the acousto-optical component 116 of the comparative example shown in Figure 1. Thus, the acousto-optical component 216 may be formed by a crystal provided with a piezoelectric transducer which can be electrically tuned to create sound waves in the crystal which serve as a diffraction grating for the light transmitting the crystal. As in the comparative example, it is assumed that the acousto-optical component 216 and the driver electronics thereof are limited in terms of a spectral width to the first wavelength range from 440 nm to 800 nm. Accordingly, the acousto-optical component 216 is only configured to actively influence wavelengths from 440 nm to 800 nm by diffraction. Wavelengths outside this range are not intended to be diffracted by the acousto-optical component 216.

The acousto-optical component 216 is illustrated in a very simplified way likewise. Thus, the acousto-optical component 116 has usually not the shape of a parallelepiped as shown in Figure 2 where light input and output surfaces of the acousto-optical component 216 are illustrated as parallel surfaces. Rather, the acousto-optical component 216 may be provided with light entrance and exit surfaces which are tilted relative to each other.

The beam splitting device 202 comprises a light coupling unit 218 which is configured to couple the first illumination light 212 and the second illumination light 214 from the single optical fiber 208 into the acousto-optical component 216. Thus, the light coupling unit 218 enables the entire illumination light 204 to be supplied to the illumination path via one single port which is represented by the optical fiber 208. In particular, the optical fiber 208 can be used to emit the first illumination light 212 and the second illumination light 214 in a collinear manner towards the light coupling unit 218. Then, as explained below in more detail, the light coupling unit 218 separates the first illumination light 212 and the second illumination light 214 spatially from each other and directs the first illumination light 212 and the second illumination light 214 along different light propagation directions into the acousto-optical component 216. Accordingly, in contrast to the comparative example of Figure 1 where the acousto-optical component 116 is bypassed by the second illumination light 112, the embodiment shown in Figure 2 enables not only the first illumination light 212 but also the second illumination light 214 to be transmitted through the acousto-optical component 216.

The light coupling unit 218 may comprise an optical element which is configured to reflect the first and second illumination lights 212, 214 along different propagation directions into the acousto-optical component 216. According to the embodiment shown in Figure 2, the optical element may be a prism with a front surface 220 facing a light output end of the optical fiber 208 and a back surface 222 facing away from the optical fiber 208. The front surface 220 comprises a first front surface portion 224 and a second front surface portion 226 spatially separated from the first front surface portion 224. Likewise, the back surface 222 comprises a first back surface portion 228 and a second back surface portion 230 which is spatially separated from the first back surface portion 228.

According to the embodiment shown in Figure 2, the front surface 220 of the light coupling unit 218 is formed by a single planar surface. Accordingly, the first and second front surface portions 224, 226 are coplanar. In contrast, the first and second back surface portions are not coplanar, i.e. tilted by an angle α relative to each other. Further, the first back surface portion 228 is oriented such that it is non-parallel to the planar front surface 228. In contrast, the second back surface portion 230 is oriented to be parallel to the planar front surface 220.

The first front surface portion 224 may be provided with a dichroic layer 232 having a spectral characteristic which is adapted to the wavelengths of the light propagating in the laser scanning microscope 200. Specifically, the dichroic layer 232 is configured to transmit the first illumination light 212 and the detection light 206 and to reflect the second illumination light 214. Thus, the first illumination light 212 is refracted by the dichroic layer 232 when entering the light coupling unit 218 towards the first back surface portion 228.

The front surface 220 of the light coupling unit 218 is oriented such that the second illumination light 214 is reflected towards the acousto-optical component 216. According to the configuration shown in Figures 2 and 3, a surface normal of the front surface 220 is oblique with respect to the incident direction of the first and second illumination lights 212, 214 at the light coupling unit 218. Accordingly, the surface normal of the front surface 220 is also oblique with respect to a direction along which the second illumination light 214 is reflected at the front surface 220 towards the acousto-optical component 216. Further, the first back surface portion 228 is configured to reflect the first illumination light 212 which is refracted by the dichroic layer 232 back to the front surface 220 where it is deflected by refraction to emerge from the light coupling unit 218 towards the acousto-optical component 216 along a propagation which differs from the propagation direction of the second illumination light 214 entering the acousto-optical component 216. Specifically, the propagation directions of the first and second illumination lights 212, 214 towards the acousto-optical component 216 are tilted to each other by an angle which corresponds to the angle α by which the first and second back surface portions 228, 230 are tilted to each other. In order to reflect the first illumination light 212 back towards the front surface 220, the first back surface portion 228 may be provided with a reflective coating 238, e.g. a metallic coating or a dielectric coating.

The acousto-optical component 216 may be tunable by a suitable driver electronics to diffract at least one spectral component of the first illumination light 212 having a selected wavelength to generate at least one illumination light beam 234 of a predetermined diffraction order while transmitting the second illumination light 214 without diffraction. According to the embodiment shown in Figures 2 and 3, the acousto-optical component 216 is configured to provide for a diffraction of the first illumination light 212 in a first diffraction order. Further, the light coupling unit 218 and the acousto-optical component 216 are adapted to each other in terms of the light propagation directions along which the first and second illumination lights 212, 214 are deflected by the light coupling unit 218 towards the acousto-optical component 216 such that the at least one illumination light beam 234 of the first illumination light 212 and the second illumination light 214 transmitted without diffraction emerge collinearly or at least in parallel from the acousto-optical component 216. Accordingly, the first and second illumination lights 212, 214 are combined by the acousto-optical component 216 in a manner which secures an illumination of the sample with spatially coinciding light in a broad wavelength region which is composed of the first and second illumination lights 212, 214.

The acousto-optical component 216 is further configured to guide the detection light 206 from the sample in a direction opposite to the propagation direction of the first and second illumination lights 212, 214. Again, a direction along which the detection light 214 propagates in the laser scanning microscope 200 is illustrated by dashed arrows in Figure 2. The detection light 206 remains unaffected by the acousto-optical component 216 when passing therethrough. Thus, the detection light 206 emerges from the acousto-optical component 216 without being diffracted thereby. The detection light 206 transmits the light coupling unit 218 while being laterally shifted due to refraction at the front surface 220 and the second back surface portion 230 which is parallel thereto. After passing the light coupling unit 218, the detection light 206 enters the additional acousto-optical component 236 which is provided to compensate for a prismatic effect which is caused by the acousto-optical component 216. Similar to the comparative example shown in Figure 1, the additional acousto-optical component 220 is structurally identical with the acousto-optical component 216 and oppositely oriented thereto. Accordingly, the acousto-optical component 236 forms a passive element in terms of diffraction so that the detection light 206 propagates towards a detector (not shown in Figures 2 and 3) without being diffracted.

The beam splitting device 202 may comprise optical means which are configured to alter a polarization state of at least one of the first and second illumination lights 212, 214 such that the illumination light beam 234, i.e. the first diffraction order generated by the acousto-optical component 216 from the first illumination light, and the second illumination light 214 emerge from the acousto-optical component 216 with equal polarization states. The afore-mentioned optical means securing equal polarization states may e.g. comprise the reflective coating 238 which is applied onto the first back surface portion 228 of the light coupling unit 218 to reflect the first illumination light 212 back to the front surface 220. The reflective coating 238 might be implemented in such a way that it does not cause a phase shift when reflecting the first illumination light 212. This might be realized, for example, by having the reflective coating 238 contain or consist of alternating, dielectric thin layers with different refractive indices (for example alternating between a low and a high refractive index), wherein one of the layers is in contact with a glass body of the light coupling unit 218 and exhibits a refractive index lower than the refractive index of the glass body of the light coupling unit 218. During reflection at this interface the light wave does not exhibit a phase shift. For such a type of reflective coating 238, maximum reflectance of the illumination light 212 at a single wavelength might be achieved with each layer having a thickness of a quarter of the wavelength of the illumination light 212.

The above described implementations of the reflective coating 238 are only examples. Other suitable implementations of reflective coatings 238 reflecting the illumination light without phase shift might for example be provided with multiple layers with different refractive index, wherein the layers might have a thickness differing from a quarter of the wavelength.

Taking into account such a characteristic of the reflective coating 238, linear polarized light may be used as illumination light 204 emitted from the optical fiber 208, wherein a polarization direction of the illumination light 204 is selected to be rotated by an angle of 45° relative to the plane of incidence of the illumination light 204 on the front surface 220 of the light coupling unit 218. Accordingly, the polarization direction of the second illumination light 214 reflected at the front surface 220 is rotated by an angle of 90°. As a result, the first and second illumination lights 212, 214 emerging from the light coupling unit 218 have polarization directions rotated relative to each other by 90°. Subsequently, the polarization direction of the first illumination light 212 is rotated by 90° by means of the acousto-optical component 216 when being diffracted into the first diffraction order. As a result, the illumination light beam 234 derived from the first illumination light 212 and the second illumination light 214 emerge from the acousto-optical component 216 with equal polarization states.

Needless to say that controlling the polarization of light in a manner as described above is to be understood merely as an example. For instance, rather than using the reflective coating 238 causing no phase shift, the polarization direction of the first illumination light may be rotated by 90° relative to the polarization direction of the second illumination light 214 before coupling the first illumination light 214 into the optical fiber 208. Such a rotation of the polarization direction may be effected by a waveplate taking into account that a polarization maintaining optical fiber can usually transmit not only a specified polarization direction but also the polarization direction rotated by 90°.

A tolerance of the angle α which determines the difference between the propagation directions along which the first and second illumination lights propagate into the acousto-optical component 216 may be chosen such that a lateral deviation of the light foci in the sample is less than twice the half-width of the point spread function (PSF), preferably less than one half-width of the PSF, and even better less than half of the half-width of the PSF.

Further, it may be considered that the first illumination light 212 undergoes dispersion during its propagation between the front surface 220 and the first back surface portion 228 and after reflection between the first back surface portion 228 and the front surface 220, which results in a wavelength-dependent angular splitting of the first illumination light 212 emerging from the light coupling unit 218. Accordingly, a wavelength-dependent lateral offset of the illumination foci in the sample may occur. Further, the crystal of the acousto-optical component 216 generally also leads to a wavelength-dependent angular splitting due to its dispersion and thus also to a wavelength-dependent lateral offset of the illumination foci. Accordingly, the light coupling unit 218 and the acousto-optical component 216 may be adapted to each other to compensate for a dispersion otherwise resulting in a lateral offset of the illumination foci. In particular, by selecting a suitable material of the light coupling unit 218 it can be achieved that the angular splitting caused by the light coupling unit 218 is equal or at least nearly equal in magnitude to the angular splitting caused by the acousto-optical component 216.

Just as an example, assumed that the acousto-optical component 216 has an angular dispersion of 0.9 mrad between the wavelengths of 490 nm and 800 nm, for the first diffraction order the same angular dispersion can be achieved in a case where the light coupling unit 218 consists of the glass material N-PK51 from SCHOTT (Abbe number *v_{d} =* 76.98), the surface normal of the front surface 220 of the light coupling unit 218 exhibits an angle of 45° with respect to the incident direction of the first and second illumination lights 212, 214, and the first and second back surface portions 228, 230 are tilted to each other by an angle α of 2°.

In general, the acousto-optical components 216, 236 are preferably designed in such a way that the angular dispersions between the wavelengths of 490 nm and 800 nm for the first diffraction order are small, i.e. preferably less than 1.5 mrad, more preferably less than 1.0 mrad, and most preferably less than 0.8 mrad. The glass material of the light coupling unit 218 has preferably an Abbe number of more than 50, more preferably of more than 60, and most preferably of more than 70.

The light coupling unit 218 may be oriented in such a way that the direction of the angular dispersion of the light coupling unit 218 is opposite to the direction of the angular dispersion of the acousto-optical component 216. Thus, by suitably arranging the light coupling unit 218 with respect to the acousto-optical component 216 a compensation of a wavelength-dependent angular splitting can be achieved.

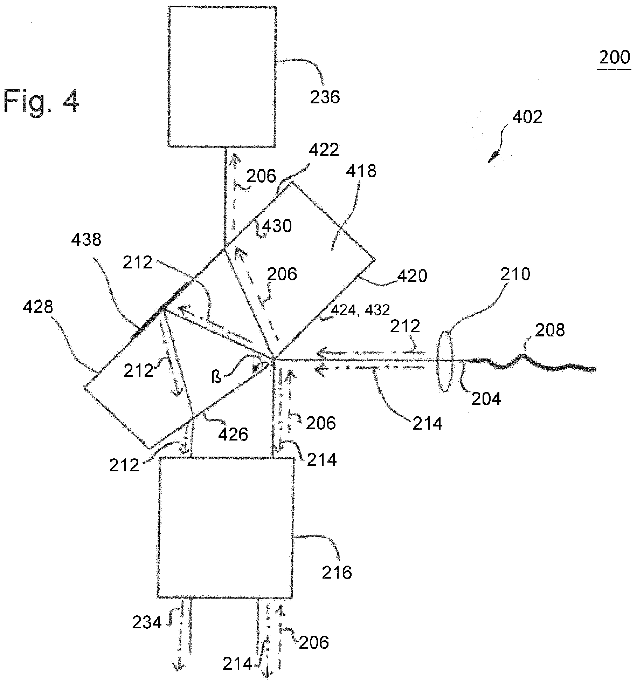

Figure 4 shows a beam splitting device 402 according to another embodiment which may be included in the laser scanning microscope 200. The beam splitting device 402 of Figure 4 essentially differs from the embodiment shown in Figures 2 and 3 by a modified light coupling unit 418.

The light coupling unit 418 shown in Figure 4 comprises a front surface 420 with a first front surface portion 424 and a second front surface portion 426. In contrast to the embodiment shown in Figures 2 and 3, the first and second front surface portions 424, 426 are not coplanar. Rather, the first and second front surface portions 424, 426 are tilted by an angle β relative to each other. Further, the light coupling unit 418 comprises a back surface 422 with a first back surface portion 428 and a second back surface portion 430. According to the embodiment shown in Figure 4, the back surface 422 including the first and second back surface portions 428, 430 is formed by a single planar surface which is parallel to the first front surface portion 424 and non-parallel to the second front surface portion 426.

The first front surface portion 424 is provided with a dichroic layer 432 which transmits both the first illumination light 212 and the detection light 206 and reflects the second illumination light 214. Thus, the first illumination light 212 is refracted by the dichroic layer 432 when entering the light coupling unit 418 towards the first back surface portion 428.

The first front surface portion 424 of the light coupling unit 418 is oriented such that the second illumination light 214 is reflected towards the acousto-optical component 216. A surface normal of the front surface portion 424 is oblique with respect to the incident direction of the first and second illumination lights 212, 214 at the light coupling unit 218. Accordingly, the surface normal of the front surface 424 is also oblique with respect to a direction along which the second illumination light 214 is reflected at the front surface 424 towards the acousto-optical component 216.

The first back surface portion 428 of the light coupling unit 418 is configured to reflect the first illumination light 212 which is refracted by the dichroic layer 432 back to the second front surface portion 426 which is tilted by the angle β relative to the first front surface portion 424. When passing through the second front surface portion 426, the first illumination light 212 is deflected by refraction to emerge from the light coupling unit 418 towards the acousto-optical component 216 along a propagation direction which differs from the propagation direction of the second illumination light 214 entering the acousto-optical component 216. Similar to the embodiment shown in Figures 2 and 3, the propagation directions of the first and second illumination lights 212, 214 towards the acousto-optical component 216 deviate from each other in accordance with the angle β by which the first and second front surface portions 424, 426 are tilted to each other. In order to reflect the first illumination light 212 back towards the second front surface portion 426, the first back surface portion 428 may be provided with a reflective coating 438, e.g. a metallic coating or a dielectric coating.

As in the embodiment shown in Figures 2 and 3, the acousto-optical component 216 of the beam splitting device 402 is tunable to diffract at least one spectral component of the first illumination light 212 in order to generate the at least one illumination light beam 234 while transmitting the second illumination light 214 without diffraction. The light coupling unit 418 and the acousto-optical component 216 are adapted to each other such that the at least one illumination light beam 234 of the first illumination light 212 and the second illumination light 214 emerge collinearly or at least (as illustrated in Figure 4) in parallel from the acousto-optical component 216 to illuminate the sample.

Similar to the embodiment shown in Figures 2 and 3, the acousto-optical component 216 of the beam splitting device 402 is configured to guide the detection light 206 from the sample in a direction opposite to the propagation direction of the first and second illumination lights 212, 214. The detection light 206 remains unaffected in terms of diffraction by the acousto-optical component 216 when passing therethrough. Thus, the detection light 206 emerges from the acousto-optical component 216 without being diffracted. The detection light 206 transmits the light coupling unit 418 while being laterally shifted due to refraction at the first front surface portion 424 and the second back surface portion 430. Since the first front surface portion 424 and the second back surface portion 430 are parallel to each other, only a parallel displacement of the detection light 206 is caused by the light coupling unit 418. After passing the additional acousto-optical component 236 which serves to compensate the prismatic effect, the detection light 206 falls onto the detector (not shown in Figure 4).

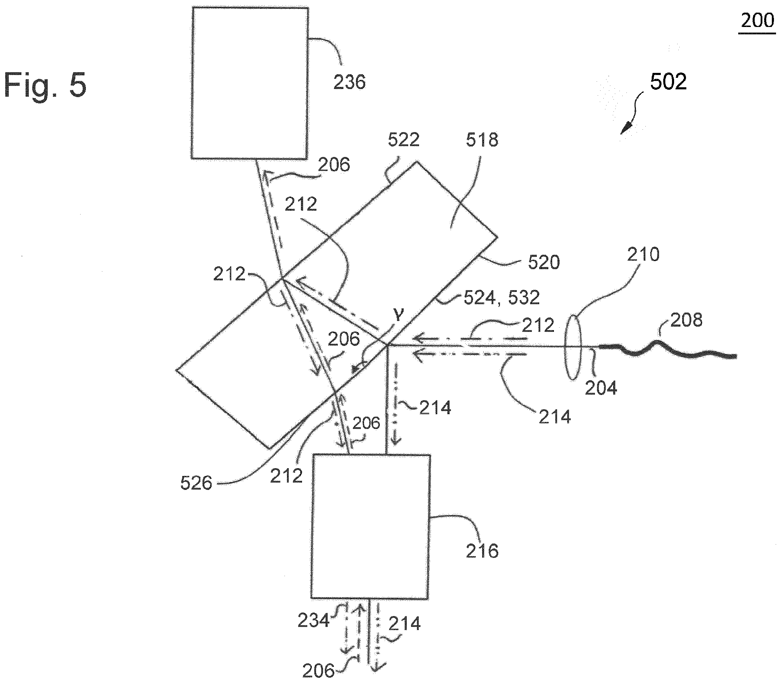

Figure 5 shows a beam splitting device 502 according to another embodiment which may be included in the laser scanning microscope 200. The configuration shown in Figure 5 differs from the embodiments of Figures 2 to 4 essentially by a modified light coupling unit 518 used in the beam splitting device 502.

The light coupling unit 518 has a front surface 520 with a first front surface portion 524 and a second front surface portion 526. The first and second front surface portions 524, 526 are not coplanar, i.e. tilted by an angle γ relative to each other. Further, the light coupling unit 518 shown in Figure 5 comprises a back surface 522 which is formed by a single planar surface being parallel to the second front surface portion 526 and non-parallel to the first front surface portion 524.

The first front surface portion 524 of the light coupling unit 518 is provided with a dichroic layer 532 which transmits the first illumination light 212 and reflects the second illumination light 214. The back surface 522 of the light coupling unit 518 may be provided with a reflective coating which is adapted to reflect the first illumination light 212 transmitted by the dichroic layer 532 back to the second front surface portion 526. Further, the reflective coating applied to the back surface 522 is adapted to transmit the detection light 206.

As in the embodiments shown in Figures 2 to 4, the acousto-optical component 216 of the beam splitting device 502 is tunable to diffract at least one spectral component of the first illumination light 212 in order to generate the at least one illumination light beam 234 while transmitting the second illumination light 214 without diffraction. The light coupling unit 518 and the acousto-optical component 216 are adapted to each other such that the at least one illumination light beam 234 of the first illumination light 212 and the second illumination light 214 emerge collinearly from the acousto-optical component 216 to illuminate the sample.

As in the embodiments described above, the acousto-optical component 216 of the beam splitting device 518 is configured to guide the detection light 206 from the sample through the light coupling unit 518 to the detector (not shown in Figure 5). The detection light 206 remains unaffected by diffraction when passing through the acousto-optical component 216. However, the detection light 206 may be deflected by refraction by means of the acousto-optical component 216 as illustrated in Figure 5. The detection light 206 may pass through the light coupling unit 518 along a direction which is opposite to the propagation direction in which the first illumination light 212 is reflected at the back surface 522 towards the second front surface portion 526 of the light coupling unit 518. Thus, the detection light 206 and the first illumination light 212 fall onto the same position on the back surface 522 where the afore-mentioned reflective coating is applied which reflects the first illumination light 212 and transmits the detection light 206. After passing the additional acousto-optical component 236 which serves to compensate the prismatic effect, the detection light 206 falls onto the detector. As already mentioned above, the detection light 206 may pass through several additional components as for example lenses, mirrors, filters, pinholes etc. which are not shown in Figure 5 before arriving at the detector.

In order to secure that the illumination light beam 234, i.e. the first diffraction order generated by the acousto-optical component 216 from the first illumination light, and the second illumination light 214 emerge from the acousto-optical component 216 with equal polarization states, the polarization direction of the first illumination light may be rotated by 90° relative to the polarization direction of the second illumination light 214 before coupling the first illumination light 214 into the optical fiber 208. As already mentioned above, such a rotation of the polarization direction may be effected by a waveplate.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: laser scanning microscope
- 102: beam splitting device
- 104: optical fiber
- 106: optical fiber
- 108: illumination light
- 112: illumination light
- 116: acousto-optical component
- 118: mirror
- 120: illumination light beam
- 122: dichroic mirror
- 124: detection light
- 126: detector
- 128: additional acousto-optical component
- 200: laser scanning microscope
- 202: beam splitting device
- 204: illumination light
- 206: detection light
- 208: light supply unit
- 210: lens
- 212: illumination light
- 214: illumination light
- 216: acousto-optical component
- 218: light coupling unit
- 220: front surface
- 222: back surface
- 224: front surface portion
- 226: front surface portion
- 228: back surface portion
- 230: back surface portion
- 232: dichroic layer
- 234: illumination light beam
- 238: reflective coating
- 402: beam splitting device
- 418: light coupling unit
- 420: front surface
- 424: front surface portion
- 426: front surface portion
- 428: back surface portion
- 430: back surface portion
- 432: dichroic layer
- 438: reflective coating
- 502: beam splitting device
- 518: light coupling unit
- 520: front surface
- 522: back surface
- 524: front surface portion
- 526: front surface portion
- 532: dichroic layer
- O: optical axis
- α: angle
- β: angle
- γ: angle

## Claims

1. A beam splitting device (202, 402, 502), configured to separate illumination light (204) applied to a sample and detection light (206) emerging from the sample in an optical apparatus (200), the beam splitting device (202, 402, 502) comprising:
a light supply unit (208) configured to supply the illumination light (204) including first illumination light (212) having wavelengths within a first wavelength range and second illumination light (214) having wavelengths within a second wavelength range, the first and second wavelength ranges being separated from each other,
an acousto-optical component (216) tunable to diffract towards the sample at least one spectral component of the first illumination light (212) having a selected wavelength within the first wavelength range to generate at least one illumination light beam (234) of a predetermined diffraction order while transmitting towards the sample the second illumination light (214) within the second wavelength range without diffraction, and
a light coupling unit (218, 418, 518) configured to couple the first illumination light (212) and the second illumination light (214) from the light supply unit (208) into the acousto-optical component (216),
wherein the light supply unit (208) is configured to supply the first illumination light (212) and the second illumination light (214) collinearly to the light coupling unit (218, 418, 518), and
wherein the light coupling unit (218, 418, 518) is configured to spatially separate the first illumination light (212) and the second illumination light (214) for directing the spatially separated first and second illumination lights (212, 214) along different light propagation directions into the acousto-optical component (216).

2. The beam splitting device (202, 402, 502) according to claim 1, wherein the light supply unit comprises a single optical fiber (208) which is configured to emit the first illumination light (212) and the second illumination light (214) collinearly towards to the light coupling unit (10xa, 10xb, 10xc).

3. The beam splitting device (202, 402, 502) according to claim 1 or 2, wherein the acousto-optical component (216) is configured to transmit the detection light (206) without diffraction.

4. The beam splitting device (202, 402, 502) according to one of the preceding claims, wherein the light coupling unit comprises an optical element (218, 418, 518) which is configured to reflect the first and second illumination lights (212, 214) along the different propagation directions into the acousto-optical component (216).

5. The beam splitting device (202, 402, 502) according to one of the preceding claims, wherein the light coupling unit (218, 418, 518) comprises a front surface (220, 420, 520) facing towards the light supply unit (208) and a back surface (222, 422, 522) facing away from the supply unit (208),
wherein the front surface (220, 420, 520) comprises a first front surface portion (224, 424, 524) with a dichroic layer (232, 432, 532) configured to reflect one of the first and second lights (212, 214) towards the acousto-optical component (216) and to transmit the other of the first and second lights (212, 214) by refraction towards the back surface (222, 422, 522),
wherein the back surface (222, 422, 522) comprises a first back surface portion (228, 428) configured to reflect the other of the first and second lights (212, 214) back to the front surface (220, 420, 520),
wherein the front surface (220, 420, 520) comprises a second front surface portion (226, 426, 526) spatially separated from the first front surface portion (224, 424, 524) and configured to transmit the other of the first and second lights (212, 214) reflected back from the first back surface portion (228, 428) by refraction towards the acousto-optical component (216), and
wherein the first back surface portion (228, 428) is non-parallel to at least one of the first and second front surface portions (220, 420, 520, 226, 426, 526).

6. The beam splitting device (202, 402) according to claim 5, wherein the first back surface portion (228, 428) comprises a reflective coating (238, 438) configured to reflect the other of the first and second lights (212, 214) back to the second front surface portion (226, 426).

7. The beam splitting device (202) according to claim 5 or 6, wherein the front surface (220) including the first and second front surface portions (224, 226) is formed by a single planar surface, and
wherein the first back surface portion (228) is non-parallel to said planar front surface.

8. The beam splitting device (402, 502) according to claim 5 or 6, wherein the back surface (422, 522) including the first back surface portion (428) is formed by a single planar surface, and
wherein one of the first and second front surface portions (424, 524, 426, 526) is non-parallel to said planar back surface while the other of the first and second front surface portions (424, 524, 426, 526) is parallel to said planar back surface.

9. The beam splitting device (202, 402, 502) according one of the claims 5 to 8, wherein the back surface (222, 422, 522) comprises a second back surface portion (230, 430) which is parallel to one of the first and second front surface portions (224, 424, 524, 226, 426, 526).

10. The beam splitting device (202, 402, 502) according to one of the claims 5 to 9, wherein the optical element (218, 418, 518) is configured to transmit the detection light (206) through those surface portions of the front and back surfaces (220, 420, 520, 222, 422, 522) which are parallel to each other.

11. The beam splitting device (202, 402, 502) according one of the preceding claims, wherein the light coupling unit (218, 418, 518) and the acousto-optical component (216) are adapted to each other such that the at least one diffracted illumination light beam (234) of the first illumination light (212) and the second illumination light (214) transmitted without diffraction emerge from the acousto-optical component (216) collinearly or at least in parallel.

12. The beam splitting device (202, 402) according to one the preceding claims, comprising optical means (238, 438) configured to alter a polarization state of at least one of the first and second illumination lights (212, 214) such that the at least one diffracted illumination beam (234) of the first illumination light (212) and the second illumination light (214) emerge from the acousto-optical component (216) with equal polarization states.

13. The beam splitting device (202, 402, 502) according to one the preceding claims, wherein the light coupling unit (218, 418, 518) and the acousto-optical component (216) are adapted to each other to compensate for dispersion.

14. The beam splitting device (202, 402, 502) according to one of the preceding claims, comprising a further acousto-optical component (236) for transmitting the detection light (206) towards a detector (126), wherein the additional acousto-optical component (236) is configured to compensate for a prismatic effect caused by the acousto-optical component (216).

15. An optical apparatus (200), preferably a microscope, in particular a laser scanning microscope, comprising a beam splitting device (202, 402, 502) according to one of the preceding claims.

## Patentansprüche

1. Strahlteilungsvorrichtung (202, 402, 502), die konfiguriert ist, um Beleuchtungslicht (204), das auf eine Probe aufgebracht wird, und Detektionslicht (206), das aus der Probe austritt, in einem optischen Gerät (200) zu trennen, die Strahlteilungsvorrichtung (202, 402, 502) umfassend:
eine Lichtversorgungseinheit (208), die konfiguriert ist, um das Beleuchtungslicht (204) zu liefern einschließlich erstem Beleuchtungslicht (212) mit Wellenlängen innerhalb eines ersten Wellenlängenbereichs und zweitem Beleuchtungslicht (214) mit Wellenlängen innerhalb eines zweiten Wellenlängenbereichs, wobei der erste und der zweite Wellenlängenbereich voneinander getrennt sind,
eine akusto-optische Komponente (216), die abstimmbar ist, um mindestens eine spektrale Komponente des ersten Beleuchtungslichts (212) mit einer ausgewählten Wellenlänge innerhalb des ersten Wellenlängenbereichs zur Probe hin zu beugen, um mindestens einen Beleuchtungslichtstrahl (234) einer vorbestimmten Beugungsordnung zu erzeugen,
während das zweite Beleuchtungslicht (214) innerhalb des zweiten Wellenlängenbereichs ohne Beugung zur Probe hin durchgelassen wird, und
eine Lichtkopplungseinheit (218, 418, 518), die konfiguriert ist, um das erste Beleuchtungslicht (212) und das zweite Beleuchtungslicht (214) von der Lichtversorgungseinheit (208) in die akusto-optische Komponente (216) einzukoppeln,
wobei die Lichtversorgungseinheit (208) konfiguriert ist, um das erste Beleuchtungslicht (212) und das zweite Beleuchtungslicht (214) kollinear zur Lichtkopplungseinheit (218, 418, 518) zu liefern, und
wobei die Lichtkopplungseinheit (218, 418, 518) konfiguriert ist, um das erste Beleuchtungslicht (212) und das zweite Beleuchtungslicht (214) räumlich zu trennen, um die räumlich getrennten ersten und zweiten Beleuchtungslichter (212, 214) entlang verschiedener Lichtausbreitungsrichtungen in die akusto-optische Komponente (216) zu leiten.

2. Strahlteilungsvorrichtung (202, 402, 502) nach Anspruch 1, wobei die Lichtversorgungseinheit eine einzelne optische Faser (208) umfasst, die konfiguriert ist, das erste Beleuchtungslicht (212) und das zweite Beleuchtungslicht (214) kollinear zur Lichtkopplungseinheit (10xa, 10xb, 10xc) zu emittieren.

3. Strahlteilungsvorrichtung (202, 402, 502) nach Anspruch 1 oder 2, wobei die akusto-optische Komponente (216) konfiguriert ist, um das Detektionslicht (206) ohne Beugung zu transmittieren.

4. Strahlteilungsvorrichtung (202, 402, 502) nach einem der vorstehenden Ansprüche, wobei die Lichtkopplungseinheit ein optisches Element (218, 418, 518) umfasst, das konfiguriert ist, um das erste und zweite Beleuchtungslicht (212, 214) entlang der verschiedenen Ausbreitungsrichtungen in die akusto-optische Komponente (216) zu reflektieren.

5. Strahlteilungsvorrichtung (202, 402, 502) nach einem der vorstehenden Ansprüche, wobei die Lichtkopplungseinheit (218, 418, 518) eine Vorderfläche (220, 420, 520), die zur Lichtversorgungseinheit (208) hin gerichtet ist, und eine Rückfläche (222, 422, 522), die von der Versorgungseinheit (208) weg gerichtet ist, umfasst,
wobei die Vorderfläche (220, 420, 520) einen ersten Vorderflächenabschnitt (224, 424, 524) mit einer dichroitischen Schicht (232, 432, 532) umfasst, die konfiguriert ist, eines der ersten und zweiten Lichter (212, 214) zur akusto-optischen Komponente (216) zu reflektieren und das andere der ersten und zweiten Lichter (212, 214) durch Brechung zur Rückfläche (222, 422, 522) zu übertragen,
wobei die Rückfläche (222, 422, 522) einen ersten Rückflächenabschnitt (228, 428) umfasst, der konfiguriert ist, um das andere der ersten und zweiten Lichter (212, 214) zurück zur Vorderfläche (220, 420, 520) zu reflektieren,
wobei die Vorderfläche (220, 420, 520) einen zweiten Vorderflächenabschnitt (226, 426, 526) umfasst, der räumlich vom ersten Vorderflächenabschnitt (224, 424, 524) getrennt ist und konfiguriert ist, das andere der ersten und zweiten Lichter (212, 214), das vom ersten Rückflächenabschnitt (228, 428) zurückreflektiert wird, durch Brechung in Richtung der akusto-optischen Komponente (216) zu übertragen, und
wobei der erste Rückflächenabschnitt (228, 428) nicht parallel zu mindestens einem der ersten und zweiten Vorderflächenabschnitte (220, 420, 520, 226, 426, 526) ist.

6. Strahlteilungsvorrichtung (202, 402) nach Anspruch 5, wobei der erste Rückflächenabschnitt (228, 428) eine reflektierende Beschichtung (238, 438) umfasst, die konfiguriert ist, um das andere der ersten und zweiten Lichter (212, 214) zurück zum zweiten Vorderflächenabschnitt (226, 426) zu reflektieren.

7. Strahlteilungsvorrichtung (202) nach Anspruch 5 oder 6, wobei die Vorderfläche (220) die ersten und zweiten vorderen Oberflächenabschnitte (224, 226) einschließt, die durch eine einzige planare Oberfläche gebildet werden, und
wobei der erste Rückflächenabschnitt (228) nicht parallel zu der planaren Vorderfläche ist.

8. Strahlteilungsvorrichtung (402, 502) nach Anspruch 5 oder 6, wobei die Rückfläche (422, 522) den ersten Rückflächenabschnitt (428) einschließt, der durch eine einzige planare Oberfläche gebildet wird, und
wobei einer der ersten und zweiten Vorderflächenabschnitte (424, 524, 426, 526) nicht parallel zu der planaren Rückfläche ist, während der andere der ersten und zweiten Vorderflächenabschnitte (424, 524, 426, 526) parallel zu der planaren Rückfläche ist.

9. Strahlteilungsvorrichtung (202, 402, 502) nach einem der Ansprüche 5 bis 8, wobei die Rückfläche (222, 422, 522) einen zweiten Rückflächenabschnitt (230, 430) umfasst, der parallel zu einem der ersten und zweiten Vorderflächenabschnitte (224, 424, 524, 226, 426, 526) ist.

10. Strahlteilungsvorrichtung (202, 402, 502) nach einem der Ansprüche 5 bis 9, wobei das optische Element (218, 418, 518) konfiguriert ist, das Detektionslicht (206) durch jene Oberflächenabschnitte der Vorder- und Rückflächen (220, 420, 520, 222, 422, 522) zu übertragen, die parallel zueinander sind.

11. Strahlteilungsvorrichtung (202, 402, 502) nach einem der vorstehenden Ansprüche, wobei die Lichtkopplungseinheit (218, 418, 518) und die akusto-optische Komponente (216) aufeinander abgestimmt sind, so dass der mindestens eine gebeugte Beleuchtungslichtstrahl (234) des ersten Beleuchtungslichts (212) und das ohne Beugung transmittierte zweite Beleuchtungslicht (214) kollinear oder zumindest parallel aus der akusto-optischen Komponente (216) austreten.

12. Strahlteilungsvorrichtung (202, 402) nach einem der vorstehenden Ansprüche, umfassend optische Mittel (238, 438), die konfiguriert sind, um einen Polarisationszustand von mindestens einem der ersten und zweiten Beleuchtungslichter (212, 214) zu ändern, so dass der mindestens eine gebeugte Beleuchtungsstrahl (234) des ersten Beleuchtungslichts (212) und des zweiten Beleuchtungslichts (214) aus der akusto-optischen Komponente (216) mit gleichen Polarisationszuständen austritt.

13. Strahlteilungsvorrichtung (202, 402, 502) nach einem der vorstehenden Ansprüche, wobei die Lichtkopplungseinheit (218, 418, 518) und die akusto-optische Komponente (216) aufeinander abgestimmt sind, um Dispersion zu kompensieren.

14. Strahlteilungsvorrichtung (202, 402, 502) nach einem der vorstehenden Ansprüche, umfassend eine weitere akusto-optische Komponente (236) zum Übertragen des Detektionslichts (206) zu einem Detektor (126), wobei die zusätzliche akusto-optische Komponente (236) konfiguriert ist, um einen prismatischen Effekt zu kompensieren, der durch die akusto-optische Komponente (216) verursacht wird.

15. Optisches Gerät (200), vorzugsweise ein Mikroskop, insbesondere ein Laserrastermikroskop, umfassend eine Strahlteilungsvorrichtung (202, 402, 502) nach einem der vorstehenden Ansprüche.

## Revendications

1. Dispositif (202, 402, 502) de division de faisceau, configuré pour séparer une lumière d'éclairage (204) appliquée à un échantillon et une lumière de détection (206) émanant de l'échantillon dans un appareil optique (200), le dispositif (202, 402, 502) de division de faisceau comprenant :
une unité de distribution de lumière (208) configurée pour distribuer la lumière d'éclairage (204) incluant une première lumière d'éclairage (212) présentant des longueurs d'onde dans une première plage de longueurs d'onde et une seconde lumière d'éclairage (214) présentant des longueurs d'onde dans une seconde plage de longueurs d'onde, les première et seconde plages de longueurs d'onde étant séparées l'une de l'autre,
un composant acousto-optique (216) réglable pour diffracter vers l'échantillon au moins une composante spectrale de la première lumière d'éclairage (212) présentant une longueur d'onde sélectionnée dans la première plage de longueurs d'onde pour générer au moins un faisceau lumineux d'éclairage (234) d'un ordre de diffraction prédéterminé tout en transmettant vers l'échantillon la seconde lumière d'éclairage (214) dans la seconde plage de longueurs d'onde sans diffraction, et
une unité de couplage de lumière (218, 418, 518) configurée pour coupler la première lumière d'éclairage (212) et la seconde lumière d'éclairage (214) de l'unité de distribution de lumière (208) dans le composant acousto-optique (216),
dans lequel l'unité de distribution de lumière (208) est configurée pour distribuer la première lumière d'éclairage (212) et la seconde lumière d'éclairage (214) de manière colinéaire à l'unité de couplage de lumière (218, 418, 518), et
dans lequel l'unité de couplage de lumière (218, 418, 518) est configurée pour séparer spatialement la première lumière d'éclairage (212) et la seconde lumière d'éclairage (214) pour diriger les première et seconde lumières d'éclairage (212, 214) séparées spatialement le long de différentes directions de propagation de lumière dans le composant acousto-optique (216).

2. Dispositif (202, 402, 502) de division de faisceau selon la revendication 1, dans lequel l'unité de distribution de lumière comprend une seule fibre optique (208) qui est configurée pour émettre la première lumière d'éclairage (212) et la seconde lumière d'éclairage (214) de manière colinéaire vers l'unité de couplage de lumière (10xa, 10xb, 10xc).

3. Dispositif (202, 402, 502) de division de faisceau selon la revendication 1 ou la revendication 2, dans lequel le composant acousto-optique (216) est configuré pour transmettre la lumière de détection (206) sans diffraction.

4. Dispositif (202, 402, 502) de division de faisceau selon l'une des revendications précédentes, dans lequel l'unité de couplage de lumière comprend un élément optique (218, 418, 518) qui est configuré pour réfléchir les première et seconde lumières d'éclairage (212, 214) le long des différentes directions de propagation dans le composant acousto-optique (216).

5. Dispositif (202, 402, 502) de division de faisceau selon l'une des revendications précédentes, dans lequel l'unité de couplage de lumière (218, 418, 518) comprend une surface avant (220, 420, 520) orientée vers l'unité de distribution de lumière (208) et une surface arrière (222, 422, 522) orientée à l'opposé de l'unité de distribution (208),
dans lequel la surface avant (220, 420, 520) comprend une première partie de surface avant (224, 424, 524) avec une couche dichroïque (232, 432, 532) configurée pour réfléchir l'une des première et seconde lumières (212, 214) vers le composant acousto-optique (216) et pour transmettre l'autre des première et seconde lumières (212, 214) par réfraction vers la surface arrière (222, 422, 522),
dans lequel la surface arrière (222, 422, 522) comprend une première partie de surface arrière (228, 428) configurée pour réfléchir l'autre des première et seconde lumières (212, 214) vers la surface avant (220, 420, 520),
dans lequel la surface avant (220, 420, 520) comprend une seconde partie de surface avant (226, 426, 526) séparée spatialement de la première partie de surface avant (224, 424, 524) et configurée pour transmettre l'autre des première et seconde lumières (212, 214) réfléchies à partir de la première partie de surface arrière (228, 428) par réfraction vers le composant acousto-optique (216), et
dans lequel la première partie de surface arrière (228, 428) n'est pas parallèle à au moins l'une des première et seconde parties de surface avant (220, 420, 520, 226, 426, 526).

6. Dispositif (202, 402) de division de faisceau selon la revendication 5, dans lequel la première partie de surface arrière (228, 428) comprend un revêtement réfléchissant (238, 438) configuré pour réfléchir l'autre des première et seconde lumières (212, 214) vers la seconde partie de surface avant (226, 426).

7. Dispositif (202) de division de faisceau selon la revendication 5 ou la revendication 6, dans lequel la surface avant (220) incluant les première et seconde parties de surface avant (224, 226) est formée par une seule surface plane, et
dans lequel la première partie de surface arrière (228) n'est pas parallèle à ladite surface avant plane.

8. Dispositif (402, 502) de division de faisceau selon la revendication 5 ou la revendication 6, dans lequel la surface arrière (422, 522) incluant la première partie de surface arrière (428) est formée par une seule surface plane, et
dans lequel l'une des première et seconde parties de surface avant (424, 524, 426, 526) n'est pas parallèle à ladite surface arrière plane tandis que l'autre des première et seconde parties de surface avant (424, 524, 426, 526) est parallèle à ladite surface arrière plane.

9. Dispositif (202, 402, 502) de division de faisceau selon l'une des revendications 5 à 8, dans lequel la surface arrière (222, 422, 522) comprend une seconde partie de surface arrière (230, 430) qui est parallèle à l'une des première et seconde parties de surface avant (224, 424, 524, 226, 426, 526).

10. Dispositif (202, 402, 502) de division de faisceau selon l'une des revendications 5 à 9, dans lequel l'élément optique (218, 418, 518) est configuré pour transmettre la lumière de détection (206) à travers ces parties de surface des surfaces avant et arrière (220, 420, 520, 222, 422, 522) qui sont parallèles les unes aux autres.

11. Dispositif (202, 402, 502) de division de faisceau selon l'une des revendications précédentes, dans lequel l'unité de couplage de lumière (218, 418, 518) et le composant acousto-optique (216) sont adaptés l'un à l'autre de sorte que l'au moins un faisceau lumineux d'éclairage diffracté (234) de la première lumière d'éclairage (212) et de la seconde lumière d'éclairage (214) transmises sans diffraction émerge du composant acousto-optique (216) de manière colinéaire ou au moins parallèle.

12. Dispositif (202, 402) de division de faisceau selon l'une des revendications précédentes, comprenant des moyens optiques (238, 438) configurés pour modifier un état de polarisation d'au moins l'une des première et seconde lumières d'éclairage (212, 214) de sorte que l'au moins un faisceau d'éclairage diffracté (234) de la première lumière d'éclairage (212) et de la seconde lumière d'éclairage (214) émerge du composant acousto-optique (216) avec des états de polarisation égaux.

13. Dispositif (202, 402, 502) de division de faisceau selon l'une des revendications précédentes, dans lequel l'unité de couplage de lumière (218, 418, 518) et le composant acousto-optique (216) sont adaptés l'un à l'autre pour compenser la dispersion.

14. Dispositif (202, 402, 502) de division de faisceau selon l'une des revendications précédentes, comprenant un composant acousto-optique (236) supplémentaire pour transmettre la lumière de détection (206) vers un détecteur (126), dans lequel le composant acousto-optique (236) supplémentaire est configuré pour compenser un effet prismatique provoqué par le composant acousto-optique (216).

15. Appareil optique (200), de préférence un microscope, en particulier un microscope à balayage laser, comprenant un dispositif (202, 402, 502) de division de faisceau selon l'une des revendications précédentes.
